# EUROPEAN PATENT APPLICATION

(11) **EP 2 564 919 A1**
(43) Date of publication of application: **06.03.2013**
(21) Application number: 12183195.2
(22) Date of filing: 05.09.2012
(51) Int. Cl.: B01D 63/08, B01D 65/10

(54) **Laboratory cross-flow membrane filtration module**

(30) Priority: 05.09.2011 PL 39620311
(71) Applicant: Polymem Ltd. Sp. z o.o., 00-695 Warszawa (PL); Politechnika Slaska, 44-100 Gliwice (PL)
(72) Inventor: Turek, Marian, 44-100 Gliwice (PL); Chorazewska, Marzena, 44-194 Knurow (PL)
(74) Representative: Sielewiesiuk, Jakub

(57) **Abstract**

The object of the invention is a laboratory cross-flow membrane filtration module. The module has a sandwich construction and has a two-part housing composed of two superposed plates (**1**, **2**) equipped with fixing means and inlet and outlet stub pipes, including two membranes (**3**) separated by a circumferential flat central gasket (**4**) having an inner profiled hole filled with a spacer **5**, forming the central feed chamber together with a membranes (**3**), and separated from the housing plate (**1**, **2**) with flat separating gaskets (**6**) having inner holes filled with the permeate spacer layer (**7**).

## Description

The object of the invention is a laboratory cross-flow membrane filtration module used for the ultrafiltration, nanofiltration and reverse osmosis.

Known so far are the laboratory dead - end membrane filtration modules, in which the magnetic stirrers are used to mix the feed and reduce the thickness of the concentration polarization layer. An example may be pressure modules, type HP4750 Stirred Cell or HP4750X Stirred Cell, manufactured by Sterlitech.

The laboratory membrane modules operating in a cross-flow mode, type Sepa CF II, manufactured by GE Osmonics Inc., USA and a module, type Rayflow X10, manufactured by Novasep, FR, are also known.

Known modules operating in a cross-flow have a sandwich construction and have a flat, two-part housing provided with fixing elements in the form of pins, one part of which is provided with a feed inlet stub pipe and retentate outlet stub pipe and the second part is provided with a permeate outlet stub pipe. Between the upper and lower part of the housing there is a circumferential sealing in the form of a profile ring and a single membrane separated from the housing with the spacers, dividing the space of the apparatus into the permeate chamber and retentate chamber. In the known apparatus the feed is introduced through a stub pipe and supply duct, located in the lower part of the housing into the chamber, in which one side is in contact with the membrane in a cross flow, and then is discharged in the form of retentate through a separate outlet duct at the bottom and outlet retentate stub pipe.

The construction of the spiral-wound pressure module, used for the purpose of the separation, primarily in an industrial scale, is also known. Spiral-wound module has a core in the form of a perforated permeate discharge pipe, on which the membrane is spirally wound, whose coils are mutually separated by spiral wound spacers. Spiral-wound set of this module is mounted in a cylindrical, sealed housing, closed at both ends with the bottoms, with the outlet holes, through which the tubular core passes, and fitted with a feed supply duct and the permeate and retentate discharge stub pipe. Such an arrangement of the layers inside the pressure module housing divides the space inside the housing into the spiral-wound chamber. In the spiral-wound module the feed flows parallel to the central permeate discharge pipe, axially, through a chamber defined by two membranes, each of which is adjacent to the permeate chamber and the permeate flows through the membrane perpendicularly to the central pipe.

Laboratory modules operating in cross-flow are commonly used in the studies where it is important to simulate the hydrodynamic conditions prevailing in the industrial spiral-wound modules. However, in the spiral-wound modules the feed, as stated above, flows through the chamber defined by two membranes, each of which is adjacent to the permeate chamber. The existing solution used in the above laboratory modules, does not fully simulate the conditions prevailing in a spiral-wound module as the feed/retentate chamber is adjacent to only one permeate chamber and not two, as it is in the spiral-wound module.

In order to standardize the nomenclature and define the basic terms below there are explanations of the terms used in the separation technique, and relating to the field of the invention.

The term membrane is to be understood as a phase separating two other phases, acting as a passive or active barrier in the material transport.

The term spacer is to be understood as a layer of permeable material, fixing the position of the membrane during the process of the pressure separation, wherein the separator material should demonstrate low flow resistance.

Feed means a feed solution which undergoes the process of separation.

Permeate means the solution which has penetrated through the membrane.

Retentate means a part of the feed solution (feed), which has not penetrated through the membrane.

The term dead end flow is to be understood as a flow in which the feed solution, also called the feed, and permeate passes through the membrane perpendicularly to the membrane surface, as in the classic filtration.

The term cross-flow (also known as crossover or tangential flow) is to be understood as a flow, in which the permeate passes through the membrane perpendicularly to the feed while the feed passing along the membrane is received from the module as the retentate.

The laboratory cross-flow membrane filtration module of the invention has a sandwich construction and has a two-part housing having two superposed plates equipped with fixing means, between which two membranes are placed, separated by a circumferential flat central gasket having an inner profiled hole filled with a spacer, forming central feed chamber together with membranes, wherein the membranes are separated from the housing plates with the flat gaskets having inner holes filled with the permeate spacer.

In a preferred embodiment, each of the housing plates has a permeate outlet, whereas one housing plate has a feed inlet and the second housing plate has a retentate outlet. Each of the sets containing the membrane and the separating gasket on one side has through holes which coincide with the central gasket profiled hole, wherein the central gasket hole and the hole of one set including a membrane and a separating gasket is applied to the outlet of the inner feed inlet duct, and the hole of the second set including a membrane and a separating gasket is applied to the inlet of the retentate discharge duct.

In order to discharge the permeate evenly at least one of the housing plates has a range of drain holes on the inside along its width, located in the contour of the separating gasket hole, which are connected with the inner permeate discharge duct.

In other embodiment of the invention, each of the housing plates has a drain hole on the inside, located in the contour of the separating gasket hole but beyond the contour of the gasket hole superimposed on the outlet of inner permeate discharge duct.

In a preferred embodiment, the housing plate has a socket, in which a permeate spacer is located.

In order to model the flow in a broad range of operating conditions the shape of the central gasket hole, forming a feed chamber and affecting the separation process by defining the separation surface, the length of the feed flow path and its contact with the surface of the membrane, may take various forms. Preferably, the central gasket hole has a sigmoidal or meander form.

The construction of the invention includes one, central feed chamber and two permeate chambers.

In the module of the invention feed/retentate and permeate solutions are flowing as in the industrial spiral-wound modules, namely the flow passes through the chamber defined by two membranes, each of which is adjacent to the permeate chamber, which allows the simulation of the hydrodynamic conditions prevailing in the industrial modules. A solution of the invention, along predetermined effective length of the membrane ensures the conversion of the feed, such as in spiral-wound modules, whereas in the prior solutions the conversion is approximately two times smaller. In the module of the invention, the membranes, permeate spacers and feed/retentate spacers may be easily replaced, which makes it particularly useful for testing the said elements.

The module of the invention may be used for solution concentration, protein separation and thickening, wine clarification, fruit juice concentration, removal of dyes from waste water, separation of the water/oil emulsions and in many other industrial processes.

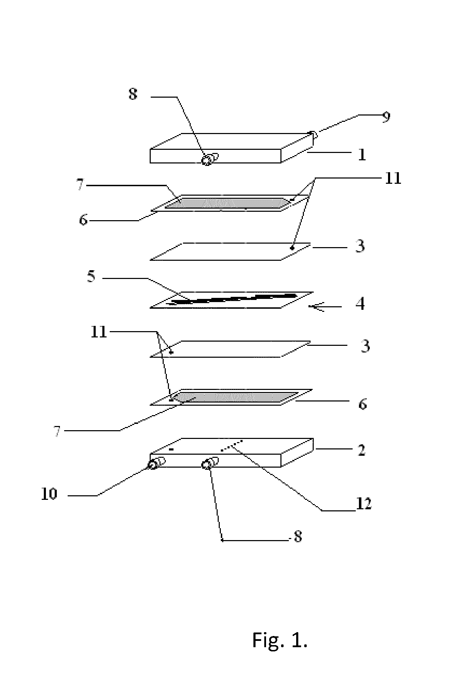

The object of the invention is presented in the attached drawing whose
fig. 1 shows in combination all the elements of the module separated from each other,

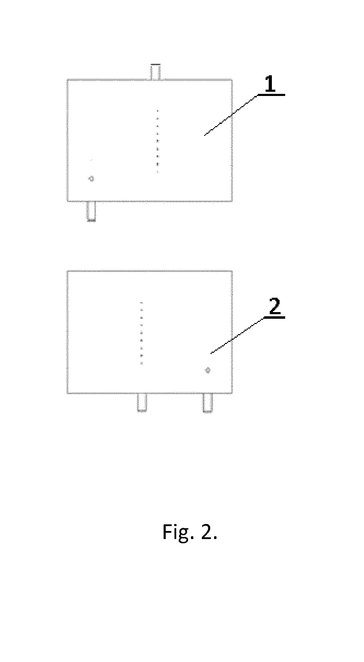

fig. 2 view of the housing plate from the inside,
fig. 3 shows a plan view of the central gasket in various embodiments of the hole a), b), c) d).
fig. 4 shows feed, permeate and retentate flow through the elements of the module of the invention.

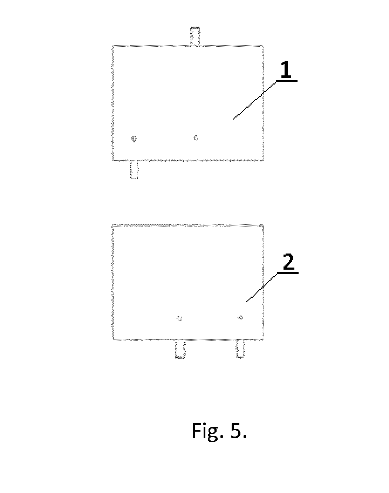

fig. 5 shows the embodiment of the invention, wherein each housing plate has a drain hole on the inside, located in the contour of the separating gasket hole but beyond the contour of the gasket hole superimposed on the outlet of inner permeate drain duct.

The laboratory cross-flow membrane filtration module of the invention has a two-part housing composed of two superposed plates: upper housing plate **1** and lower housing plate **2,** between which two membranes **3** are placed separated by a circumferential flat central gasket **4** having an inner profiled hole filled with a spacer **5**, forming central feed chamber together with a membranes **3**, and separated from the housing plate **1, 2** with flat separating gaskets **6** having inner holes filled with the permeate spacer layer **7.** Each of the housing plates **1, 2** has a permeate outlet in the form of an inner duct and outer stub pipe **8,** while the upper housing plate **1** has a feed inlet in the form of the outer stub pipe **9** and an inner duct, and the lower housing plate **2** has a retentate outlet in the form of an inner duct and outer stub pipe **10.** Each of the sets comprising a membrane **3** and a separating gasket **6** has through holes **11** on one side, which coincide with the profiled hole filed with the spacer layer **5,** wherein the central gasket hole **4** and the hole of one set including the membrane **3** and the separating gasket **6** is applied to the outlet of the inner feed inlet duct, and the hole of the second set including the membrane **3** and the separating gasket **6** is applied to the inlet of the retentate inlet duct. Each of the housing plates **1, 2** has a range of drain holes **12** on the inside along its width, located in the contour of the separating gasket hole 6, which are connected with the inner permeate discharge duct.

In other embodiment of the invention, each of the housing plates **1, 2** has a drain hole **12** on the inside, located in the contour of the separating gasket hole **6** but beyond the contour of the gasket hole 4 superimposed on the outlet of inner permeate drain duct.

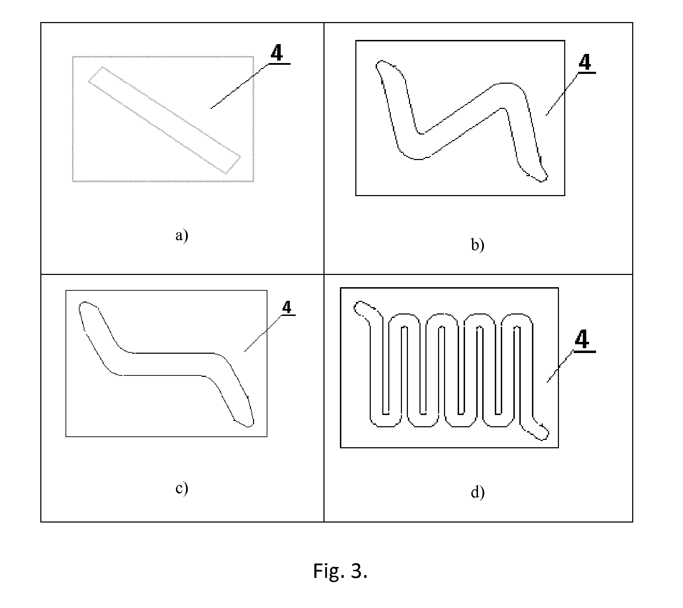

Central gasket hole **4** in the embodiments of the inventions has the form of a rectangular, narrow cut, as shown in fig. 3 a) or is a zig-zag cut, as shown in fig. 3 b) or has a sigmoidal form, as shown in fig. 3 c) or a form of more or less developed meander, as shown in fig. 3 d).

In the module of the invention two sheets of membrane **3** with a central gasket **4** placed between them, in whose hole a spacer **5** is placed, form a feed/retentate chamber. Feed/retentate chamber is located between two permeate chambers. Permeate chamber is a space defined by the housing plate of the module **1, 2,** the separating gasket **6,** and the membrane **3;** it is filled with the permeate spacer **7.**

In order to perform the separation test using the module of the invention, the module is placed under a press and is pressed with sufficient force. Pressure force depends on the pressure at which the tests will be conducted.

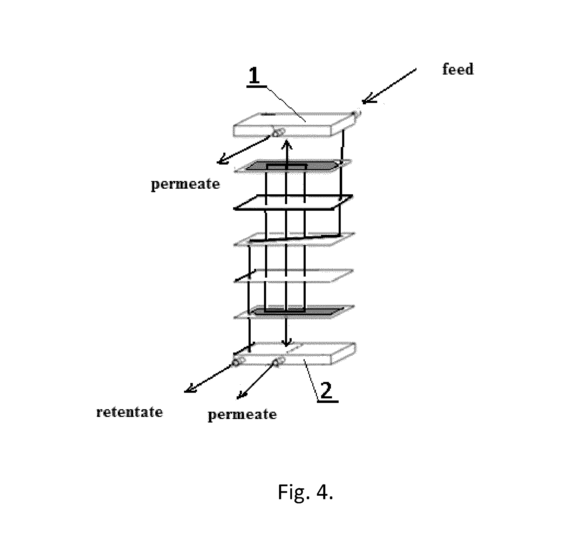

The flow of the solutions in the module is shown in fig. 4 of the drawing. The feed is introduced into the feed/retentate chamber through an inlet stub pipe **9**. Part of the feed that does not permeate through the membrane 3, leaves the chamber as the retentate. Retentate is drained through the outlet stub pipe **10**. Part of the feed, which has permeated through the membrane (permeate) flows into the permeate chambers located above and below the feed/retentate chamber. The permeate spacer **7** directs the permeate to the drain holes **12,** and then the permeate is discharged from the module with the stub pipes 8**.** Both the feed and the retentate do not mix with the permeate thanks to the separating gasket **6**. The separating gasket 6 plays a key role in the construction of the module of the invention, because thanks to it the module can operate in the configuration permeate chamber/chamber retentate/permeate chamber.

## Claims

1. The laboratory cross-flow membrane filtration module, having a sandwich construction and comprising a two-part housing having two superposed plates equipped with fixing means and inlet and outlet stub pipes and inner flow ducts and equipped with circumferential sealing adjacent to them, between which a membrane and a spacer are placed, **characterised in that** it has two membranes (**3**) separated by a circumferential flat central gasket (**4**), having an inner profiled hole filled with a spacer (**5**), forming central feed chamber together with a membranes and separated from the housing plates (**1**, **2**) with the flat separating gaskets (**6**) having inner holes filled with the permeate spacer (**7**).

2. The laboratory membrane module according to claim 1, **characterised in that** each of the housing plates (**1**, **2**) has a permeate outlet in the form of the inner duct and outer stub pipe (**8**), whereas one housing plate (**1**) has a feed inlet in the form of the outer stub pipe (**9**) and the inner duct, and the second housing plate (**2**) has a retentate outlet in the form of the inner duct and outer stub pipe (**10**), wherein the central gasket (**4**) has a profiled hole, and each of the sets comprising the membrane (**3**) and the separating gasket (**6**) on one side has through holes which coincide with the central gasket (**4**) profiled hole, wherein the central gasket (**4**) hole and the hole of one set including a membrane (**3**) and a separating gasket (**6**) is applied to the outlet of the inner feed inlet duct, and the hole of the second set including a membrane (**3**) and a separating gasket (**6**) is applied to the inlet of the retentate inlet duct.

3. The laboratory membrane module according to claim 1 or claim 2, **characterised in that** each of the housing plates (**1**, **2**) has a permeate outlet in the form of the inner duct and outer stub pipe (**8**), and one housing plate has a feed inlet in the form of the outer stub pipe (**9**) and inner duct and retentate outlet in the form of the inner duct and outer stub pipe (**10**), wherein central gasket (**4**) has a profiled hole, and one set comprising the membrane (**3**) and the separating gasket (**6**) has through holes on both sides, which coincide with the central gasket (**4**) profiled hole, wherein the central gasket (**4**) hole and holes of such set including the membrane (**3**) and the separating gasket (**6**) superimpose on the outlet of the inner feed inlet duct and the inlet of the retentate outlet duct.

4. The laboratory membrane module according to claim 1 or claim 2 or claim 3, **characterised in that** each of the housing plates (**1**, **2**) has a drain hole (**12**) on the inside, located in the contour of the separating gasket (**6**) hole, but beyond the contour of the gasket (**4**) hole superimposed on the outlet of inner permeate discharge duct.

5. The laboratory membrane module according to claim 1 or claim 2 or claim 3, **characterised in that** each of the housing plates (**1**, **2**) has a range of drain holes (**12**) on the inside along its width, located in the contour of the separating gasket (**6**) hole, which are connected with the inner permeate discharge duct.

6. The laboratory membrane module according to claim 1 or claim 2 or claim 3 or claim 4 or claim 5, **characterised in that** central gasket (**4**) hole adopts various shapes, preferably a sigmoidal or meander form.

7. The laboratory membrane module according to claim 1 or claim 2 or claim 3 or claim 4 or claim 5 or claim 6, **characterised in that** the housing plate (**1**, **2**) has a socket, in which a permeate spacer (**7**) is located.
